# EUROPEAN PATENT APPLICATION

(11) **EP 4 679 898 A1**
(43) Date of publication of application: **14.01.2026**
(21) Application number: 24781314.0
(22) Date of filing: 29.03.2024
(51) Int. Cl.: H04W 48/16, H04W 8/00, H04W 4/80, H04W 76/14, H04W 76/15, H04W 74/04, H04W 84/12

(54) **METHOD AND DEVICE FOR PERFORMING WI-FI AWARE COMMUNICATION**

(30) Priority: 29.03.2023 KR 20230041556
(71) Applicant: Samsung Electronics Co., Ltd, Suwon-si, Gyeonggi-do 16677 (KR)
(72) Inventor: OH, Hyunseob, Suwon-si Gyeonggi-do 16677 (KR); KIM, Junsung, Suwon-si Gyeonggi-do 16677 (KR); SEO, Seungbeom, Suwon-si Gyeonggi-do 16677 (KR); JUNG, Buseop, Suwon-si Gyeonggi-do 16677 (KR); CHOI, Junyoung, Suwon-si Gyeonggi-do 16677 (KR); HAN, Sehee, Suwon-si Gyeonggi-do 16677 (KR)
(74) Representative: HGF
(86) International application number: PCT/KR2024/004083
(87) International publication number: WO 2024/205324

(57) **Abstract**

A method for operating an electronic device for performing Wi-Fi Aware communication according to an embodiment of the present disclosure comprises the operations of: transmitting a Bluetooth low energy (BLE) advertisement message, and activating a Wi-Fi Aware module of the electronic device; identifying whether a real-time simultaneous dual-band (RSDB) function is available; as a result of the identification, when the RSDB function is available, selecting one RSDB scheduling option from among multiple RSDB scheduling options on the basis of an access point (AP) traffic characteristic and whether there is an AP connection of the electronic device; and performing a discovery procedure according to the selected RSDB scheduling option.

## Description

### [Technical Field]

The disclosure relates to a method for Wi-Fi Aware communication between electronic devices.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment, intelligent Internet Technology (IT) services that collect and analyze data generated by connected things to create new value for human life may be provided. The IoT may be applied in various fields, such as smart homes, smart buildings, smart cities, smart or connected cars, smart grids, health care, smart appliances, and state-of-the-art medical services, through the convergence and integration of conventional Information Technology (IT) and various industries.

Wi-Fi CERTIFIED Wi-Fi Aware^{™} (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi Aware may provide the function of enabling a mutual search and direct connection between devices even without any other type of connection. Wi-Fi Aware may also be referred to as neighbor awareness networking (NAN).

### [Detailed Description of the Invention]

### [Technical Problem]

The disclosure proposes a method for managing wireless channel and time resources during Wi-Fi Aware communication.

### [Technical Solution]

According to an embodiment of the disclosure, a method of operating an electronic device performing Wi-Fi Aware communication includes transmitting a Bluetooth low energy (BLE) advertisement message and activating a Wi-Fi Aware module of the electronic device, identifying whether a real-time simultaneous dual band (RSDB) function is available, if the RSDB function is available as a result of the identifying, selecting one RSDB scheduling option from among a plurality of RSDB scheduling options based on whether there is an access point (AP) connection of the electronic device and AP traffic characteristics, and performing a discovery procedure according to the selected RSDB scheduling option.

According to an embodiment of the disclosure, an electronic device performing Wi-Fi Aware communication comprises a transceiver; and a controller. The controller may transmit a Bluetooth low energy (BLE) advertisement message and activate a Wi-Fi Aware module of the electronic device. The controller may identify whether a real-time simultaneous dual band (RSDB) function is available. The controller may, if the RSDB function is available as a result of the identifying, select one RSDB scheduling option from among a plurality of RSDB scheduling options based on whether there is an access point (AP) connection of the electronic device and AP traffic characteristics. The controller may perform a discovery procedure according to the selected RSDB scheduling option.

### [Advantageous Effects]

According to an embodiment of the disclosure, an electronic device may utilize enhanced wireless channel and time resources during Wi-Fi Aware communication.

According to an embodiment of the disclosure, an electronic device may enhance communication efficiency by adaptively selecting a scheduling method during Wi-Fi Aware communication.

### [Brief Description of Drawings]

FIG. 1 illustrates an example of device and service discovery of a Wi-Fi Aware device.
FIG. 2 illustrates an example of various nodes included in a cluster.
FIG. 3 is a view illustrating an unsynchronized service discovery (USD) operation of Wi-Fi Aware devices according to an embodiment of the disclosure.
FIG. 4 is a view illustrating a USD operation of Wi-Fi Aware devices according to another embodiment of the disclosure.
FIG. 5 is a view illustrating a USD operation of Wi-Fi Aware devices according to another embodiment of the disclosure.
FIG. 6 is a view illustrating a service discovery period (SDP) according to an embodiment of the disclosure.
FIG. 7 illustrates examples of channel and time resource operation according to whether real-time simultaneous dual band (RSDB) is operated according to an embodiment of the disclosure.
FIG. 8 illustrates examples of channel and time resource operation according to various conditions in an RSDB operable circumstance according to an embodiment of the disclosure.
FIG. 9 is a flowchart for describing an operation of an electronic device (sender) according to an embodiment of the disclosure.
FIG. 10 is a view illustrating a structure of an electronic device (sender) according to an embodiment of the disclosure.
FIG. 11 is a view illustrating a structure of an electronic device (receiver) according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present disclosure is omitted. This is for further clarifying the gist of the present disclosure without making it unclear.

For the same reasons, some elements may be exaggerated or schematically shown. The size of each element does not necessarily reflect the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present disclosure is not limited to the embodiments disclosed herein, and various changes may be made thereto. The embodiments disclosed herein are provided only to inform one of ordinary skilled in the art of the category of the present disclosure. The present disclosure is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Wi-Fi CERTIFIED Wi-Fi Aware^{™} (Wi-Fi Aware) is a technology that extends the capabilities of Wi-Fi by enabling rapid discovery, connection, and data exchange with other Wi-Fi devices without the need for traditional network infrastructure, Internet connection, or GPS signals. Wi-Fi Aware may provide the function of enabling a mutual search and direct connection between devices even without any other type of connection. Wi-Fi Aware may also be referred to as neighbor awareness networking (NAN).

Wi-Fi Aware networking may work by forming a cluster with a peripheral device or by creating a new cluster if the device is the first device in the area. An application may communicate with a Wi-Fi Aware system service that manages the device's Wi-Fi Aware hardware using a Wi-Fi Aware application programming interface (Wi-Fi Aware API). For example, a Wi-Fi Aware network connection may support higher processing speeds over long distances where Bluetooth connections are not reachable. For example, the Wi-Fi Aware network connection may be useful for apps that share large amounts of data between users, such as photo-sharing apps.

Bluetooth low energy (BLE) refers to a technology that operates at lower power than conventional Bluetooth (or Bluetooth classic) and may be used in electronic devices such as smart bands, watches, and beacons, for example.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

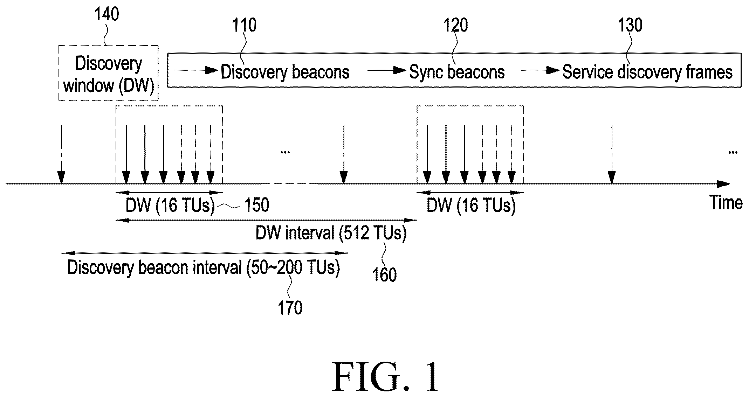

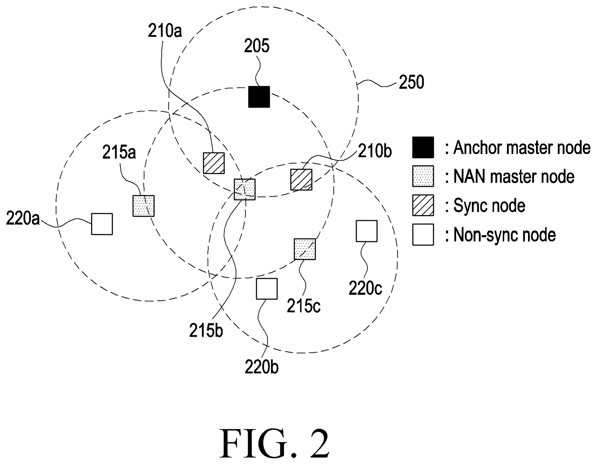

FIG. 1 and FIG. 2 show examples of legacy Wi-Fi operation and node configuration.

FIG. 1 illustrates an example of device and service discovery of a Wi-Fi Aware device.

Referring to FIG. 1, at least one electronic device included in a cluster may transmit at least one discovery beacon 110 according to the NAN specification. The at least one electronic device may transmit at least one synchronization beacon 120 and/or at least one service discovery frame 130 within a discovery window (DW) 140 that occupies 16 time units (TU) according to the NAN specification.

According to an embodiment, the DW 140 may occupy 16 TUs, and a DW interval 160, which is a time interval between DWs 140, may occupy 512 TUs. According to an embodiment, a discovery beacon interval 170 indicating a transmission interval of the at least one discovery beacon 110 may occupy 50 to 200 TUs. A time during which an electronic device performs discovery may be dependent on the DW interval 160.

According to an embodiment, the at least one synchronization beacon 120 may be a signal for maintaining synchronization (e.g., time clock synchronization) between electronic devices included in a cluster. The at least one synchronization beacon 120 may include at least one piece of information accompanying synchronization between electronic devices.

For example, the at least one synchronization beacon 120 may include at least one of a frame control (FC) field indicating a function (e.g., beacon) of a signal, a broadcast address, a media access control (MAC) address of an electronic device that transmitted the at least one synchronization beacon 120, a cluster identifier, a sequence control field, a time stamp for a beacon frame, a beacon interval field indicating an interval between start times of synchronized communication sections, or capability information of an electronic device that transmitted the at least one synchronization beacon 120.

The at least one synchronization beacon 120 may include at least one information element related to at least one proximity network, and may include, e.g., service-related content that may be provided based on a proximity network. According to the NAN specification, the at least one synchronization beacon 120 may be transmitted by an electronic device defined as an anchor master device, a master device, or a non-master sync device among at least one electronic device in a cluster.

According to an embodiment, the at least one service discovery frame 130 may be a signal for advertising a service between at least one electronic device in a cluster and exchanging information related to the service based on a proximity network. According to the NAN specification, the at least one service discovery frame 130 is a vendor specific public action frame and may include various fields. For example, the at least one service discovery frame 130 may include at least one information element related to at least one proximity network.

According to an embodiment, the at least one electronic device may transmit the at least one discovery beacon 110 within an interval other than a DW interval 240. The at least one discovery beacon 110 may be a signal of a cluster advertisement function transmitted so that at least one electronic device that has not joined a cluster may discover the cluster.

According to an embodiment, at least one electronic device that has not joined a cluster may perform a passive scan to detect the at least one discovery beacon 110 transmitted from at least one electronic device participating in a cluster, thereby discovering the cluster and joining the cluster.

According to an embodiment, the at least one discovery beacon 110 may include at least one piece of information for synchronizing to a cluster. According to an embodiment, the discovery beacon 110 may include at least one of a frame control (FC) field indicating a function (e.g., beacon) of a signal, a broadcast address, a media access control (MAC) address of an electronic device that transmitted the at least one discovery beacon 110, a cluster identifier, a sequence control field, a time stamp for a beacon frame, a discovery beacon interval field indicating a transmission interval of the at least one discovery beacon 110, or capability information of an electronic device that transmitted the at least one discovery beacon 110. According to an embodiment, the at least one discovery beacon 110 may include at least one information element related to at least one proximity network.

FIG. 2 illustrates an example of various nodes included in a cluster.

Each of the nodes illustrated in FIG. 2 may be implemented as an electronic device (or Wi-Fi Aware device). Referring to FIG. 2, each of the electronic devices may be classified as an anchor master node 205, NAN master nodes 215a, 215b, 215c, sync nodes 210a, 210b, or non-sync nodes 220a, 220b, 220c.

According to an embodiment, the anchor master node 205 may communicate with the sync nodes 210a, 210b and the NAN master node 215b within coverage through the discovery method of FIG. 1. According to an embodiment, the anchor master node 205 has constraints in direct communication with nodes positioned outside coverage and may communicate with nodes positioned outside coverage through hops via connections with other master nodes.

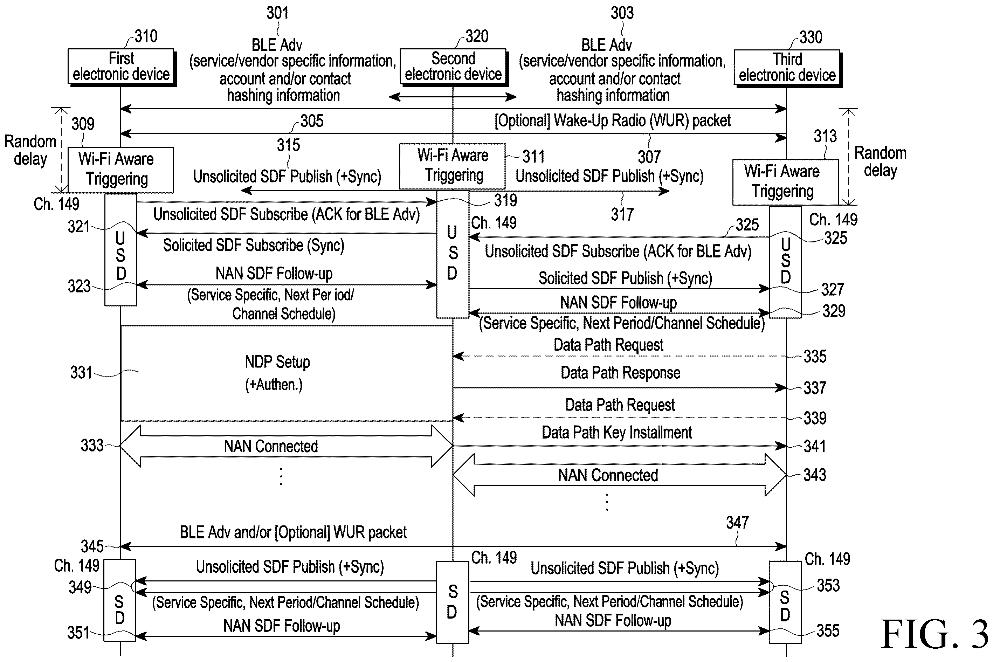

FIG. 3 is a view illustrating an unsynchronized service discovery (USD) operation of Wi-Fi Aware devices according to an embodiment of the disclosure.

Referring to FIG. 3, a first electronic device 310 may be a Wi-Fi Aware device performing a receiver role, a second electronic device 320 may be a Wi-Fi Aware device performing a sender role, and a third electronic device 330 may be a Wi-Fi Aware device performing a receiver role.

In operation 301, the second electronic device 320 may transmit a BLE advertisement message including provided service information (e.g., Vendor/Service Specific information, account and/or contact hashing information) to the first electronic device 310. In operation 303, the second electronic device 320 may transmit a BLE advertisement message including provided service information (e.g., Vendor/Service Specific information, account and/or contact hashing information) to the third electronic device 330.

According to an embodiment, in operation 305, the second electronic device 320 may transmit a wake up radio (WUR) packet to the first electronic device 310. According to an embodiment, in operation 307, the second electronic device 320 may transmit a WUR packet to the third electronic device 330.

The second electronic device 320 may trigger a Wi-Fi Aware interface (receiver) of another electronic device using an out of band (OOB) message (e.g., BLE advertisement message or WUR packet).

In operation 309, the first electronic device 310 may trigger a Wi-Fi Aware interface within a random delay after receiving a BLE advertisement message or WUR packet from the second electronic device 320. In operation 311, the second electronic device 320 may trigger its own Wi-Fi Aware interface after transmitting a BLE advertisement message or WUR packet. In operation 313, the third electronic device 330 may trigger a Wi-Fi Aware interface within a random delay after receiving a BLE advertisement message or WUR packet from the second electronic device 320.

According to an embodiment, if the Wi-Fi Aware interface of the second electronic device 320 is activated, the second electronic device 320 may wait for reception of an SDF subscribe message as an ACK for the previous OOB message.

The first electronic device 310 to the third electronic device 330 may support fast discovery among multiple devices by performing unsynchronized service discovery (USD) on a predesignated channel (e.g., channel 149) after triggering a Wi-Fi Aware interface for each device.

According to an embodiment, in operations 315 and 317, the second electronic device 320 may transmit an unsolicited service discovery frame (SDF) publish message including synchronization information (sync). According to an embodiment, the synchronization information may include additional timing synchronization function (TSF) information for synchronization.

According to an embodiment, during a USD procedure on a predesignated channel (e.g., channel 149), in operation 319, the first electronic device 310 may transmit an unsolicited SDF subscribe message to the second electronic device 320 as an ACK for a BLE advertisement message. As an active subscriber, the first electronic device 310 may transmit an unsolicited SDF subscribe message without receiving a message from a publisher.

During the USD procedure, in operation 321, the second electronic device 320 may transmit a solicited SDF publish message including synchronization information (sync) to the first electronic device 310. The solicited SDF publish message may be a unicast message. According to an embodiment, the synchronization information may include additional timing synchronization function (TSF) information for synchronization. In operation 323, the first electronic device 310 and the second electronic device 320 may exchange NAN SDF Follow-up messages. According to an embodiment, the NAN SDF Follow-up message may be a service specific message and may include schedule information for a next period and/or channel.

According to an embodiment, during a USD procedure on a predesignated channel (e.g., channel 149), in operation 325, the third electronic device 330 may transmit an unsolicited SDF subscribe message to the second electronic device 320 as an ACK for a BLE advertisement message. As an active subscriber, the third electronic device 330 may transmit an unsolicited SDF subscribe message without receiving a message from a publisher.

During the USD procedure, in operation 327, the third electronic device 330 may transmit a solicited SDF publish message including synchronization information (sync) to the first electronic device 310. The solicited SDF publish message may be a unicast message. According to an embodiment, the synchronization information may include additional timing synchronization function (TSF) information for synchronization. In operation 329, the third electronic device 330 and the second electronic device 320 may exchange NAN SDF Follow-up messages. According to an embodiment, the NAN SDF Follow-up message may be a service specific message and may include schedule information for a next period and/or channel.

In operation 331, the first electronic device 310 and the second electronic device 320 may perform a NAN data path (NDP) setup procedure. The NDP setup procedure may include an authentication procedure. In operation 333, a NAN connection may be established between the first electronic device 310 and the second electronic device 320.

In operation 335, the third electronic device 330 transmits a Data Path Request message to the second electronic device 320 and, in operation 337, the third electronic device 330 may receive a Data Path Response message from the second electronic device 320. In operation 339, the third electronic device 330 transmits a Data Path Request message to the second electronic device 320 and, in operation 341, the third electronic device 330 may receive a Data Path Key Installment message from the second electronic device 320. In operation 343, a NAN connection may be established between the third electronic device 330 and the second electronic device 320.

In operation 345, the second electronic device 320 may transmit a BLE advertisement message and/or WUR packet to the first electronic device 310. In operation 347, the second electronic device 320 may transmit a BLE advertisement message and/or WUR packet to the third electronic device 330.

During a service discovery (SD) procedure on a predesignated channel (e.g., channel 149), in operation 349, the second electronic device 320 may transmit an unsolicited SDF publish message including synchronization information (sync) to the first electronic device 310. According to an embodiment, the synchronization information may include additional timing synchronization function (TSF) information for synchronization. In operation 351, the first electronic device 310 and the second electronic device 320 may exchange NAN SDF Follow-up messages.

During an SD procedure on a predesignated channel (e.g., channel 149), in operation 353, the second electronic device 320 may transmit an unsolicited SDF publish message including synchronization information (sync) to the third electronic device 330. According to an embodiment, the synchronization information may include additional timing synchronization function (TSF) information for synchronization. In operation 355, the third electronic device 330 and the second electronic device 320 may exchange NAN SDF Follow-up messages.

According to an embodiment, if an NDP is established, data may be transmitted between Wi-Fi Aware devices included in a cluster. According to a specific service type, the next timing of a service discovery period, DW, and operating channel may be reserved by SDF publish/subscribe and NAN SDF follow-up messages.

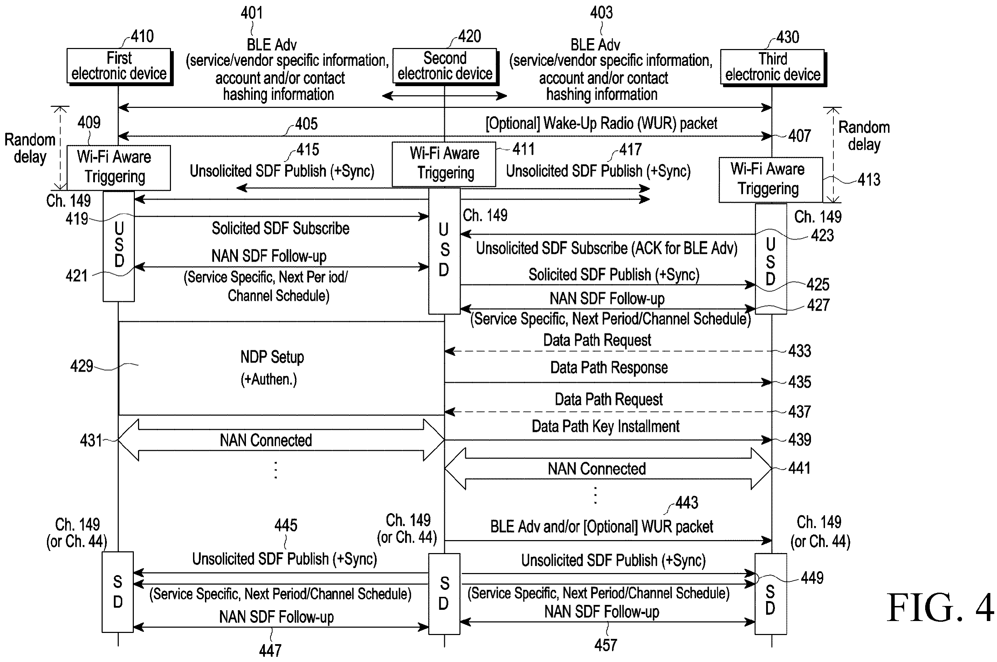

FIG. 4 is a view illustrating an unsynchronized service discovery (USD) operation of Wi-Fi Aware devices according to another embodiment of the disclosure.

Referring to FIG. 4, a first electronic device 410 may be a Wi-Fi Aware device performing a receiver role, a second electronic device 420 may be a Wi-Fi Aware device performing a sender role, and a third electronic device 430 may be a Wi-Fi Aware device performing a receiver role.

In operation 401, the second electronic device 420 may transmit a BLE advertisement message including provided service information (e.g., Vendor/Service Specific information, account and/or contact hashing information) to the first electronic device 410. In operation 403, the second electronic device 420 may transmit a BLE advertisement message including provided service information (e.g., Vendor/Service Specific information, account and/or contact hashing information) to the third electronic device 430.

According to an embodiment, in operation 405, the second electronic device 420 may transmit a wake up radio (WUR) packet to the first electronic device 410. According to an embodiment, in operation 407, the second electronic device 420 may transmit a WUR packet to the third electronic device 430.

In operation 409, the first electronic device 410 may trigger a Wi-Fi Aware interface within a random delay after receiving a BLE advertisement message or WUR packet from the second electronic device 420. In operation 411, the second electronic device 420 may trigger its own Wi-Fi Aware interface after transmitting a BLE advertisement message or WUR packet. In operation 413, the third electronic device 430 may trigger a Wi-Fi Aware interface within a random delay after receiving a BLE advertisement message or WUR packet from the second electronic device 420.

According to an embodiment, in operations 415 and 417, the second electronic device 420 may transmit an unsolicited service discovery frame (SDF) publish message including synchronization information (sync). According to an embodiment, the synchronization information may include additional timing synchronization function (TSF) information for synchronization.

According to an embodiment, during a USD procedure on a predesignated channel (e.g., channel 149), the first electronic device 410 may receive an unsolicited SDF publish message from the second electronic device 420. In operation 419 of the USD procedure, the first electronic device 410 may transmit a solicited SDF subscribe message to the second electronic device 320. The solicited SDF subscribe message may be a unicast message. In operation 421 of the USD procedure, the first electronic device 410 and the second electronic device 420 may exchange NAN SDF Follow-up messages. According to an embodiment, the NAN SDF Follow-up message may be a service specific message and may include schedule information for a next period and/or channel.

Each of operations 423 to 441 of FIG. 4 is identical to each of operations 325 to 343 of FIG. 3, and thus a description thereof is omitted.

In operation 443, the second electronic device 420 may transmit a BLE advertisement message and/or a WUR packet to the third electronic device 430 through a predetermined channel (e.g., channel 149 or channel 44). According to an embodiment, a channel on which operation 443 is performed and a channel on which a USD operation is performed may be different from each other.

During a service discovery (SD) procedure on a predesignated channel (e.g., channel 149 or channel 44), in operation 445, the second electronic device 420 may transmit an unsolicited SDF publish message including synchronization information (sync) to the first electronic device 410. According to an embodiment, the synchronization information may include additional timing synchronization function (TSF) information for synchronization. In operation 447, the first electronic device 410 and the second electronic device 420 may exchange NAN SDF Follow-up messages.

During an SD procedure on a predesignated channel (e.g., channel 149 or channel 44), in operation 449, the second electronic device 420 may transmit an unsolicited SDF publish message including synchronization information (sync) to the third electronic device 430. In operation 451, the third electronic device 430 and the second electronic device 420 may exchange NAN SDF Follow-up messages.

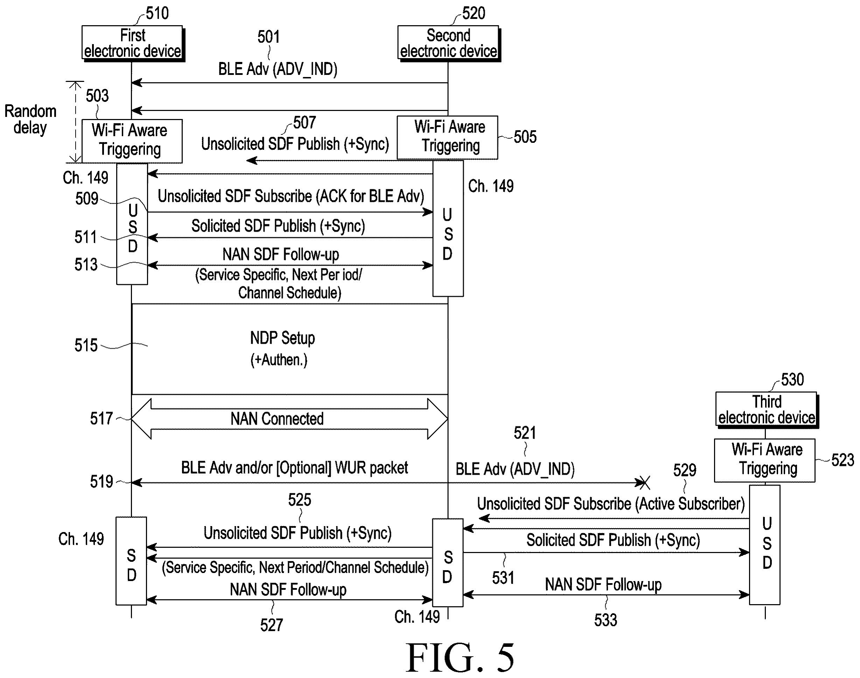

FIG. 5 is a view illustrating an unsynchronized service discovery (USD) operation of Wi-Fi Aware devices according to another embodiment of the disclosure.

Referring to FIG. 5, a first electronic device 510 may be a Wi-Fi Aware device performing a receiver role, a second electronic device 520 may be a Wi-Fi Aware device performing a sender role, and a third electronic device 530 may be a Wi-Fi Aware device performing a receiver role.

In operation 501, the second electronic device 520 may transmit a BLE advertisement message including an advertisement indicator (ADV_IND) to the first electronic device 510. According to an embodiment, the second electronic device 520 may transmit a plurality of BLE advertisement messages to the first electronic device 510.

In operation 503, the first electronic device 510 may trigger a Wi-Fi Aware interface within a random delay after receiving the BLE advertisement message from the second electronic device 520. In operation 505, the second electronic device 520 may trigger its Wi-Fi Aware interface after transmitting the BLE advertisement message.

The first electronic device 510 and the second electronic device 520 may support fast discovery among multiple devices by performing USD in a predetermined channel (e.g., channel 149) after triggering a Wi-Fi Aware interface for each device.

According to an embodiment, in operation 507, the second electronic device 520 may transmit an unsolicited SDF publish message including synchronization information (sync). According to an embodiment, the synchronization information may include additional timing synchronization function (TSF) information for synchronization.

According to an embodiment, during a USD procedure on a predesignated channel (e.g., channel 149), in operation 509, the first electronic device 510 may transmit an unsolicited SDF subscribe message to the second electronic device 520 as an ACK for a BLE advertisement message. During the USD procedure, in operation 511, the second electronic device 520 may transmit a solicited SDF publish message including synchronization information (sync) to the first electronic device 510. The solicited SDF publish message may be a unicast message. In operation 513, the first electronic device 510 and the second electronic device 520 may exchange NAN SDF Follow-up messages. According to an embodiment, the NAN SDF Follow-up message may be a service specific message and may include schedule information for a next period and/or channel.

In operation 515, the first electronic device 510 and the second electronic device 520 may perform a NAN data path (NDP) setup procedure. The NDP setup procedure may include an authentication procedure. In operation 517, a NAN connection may be established between the first electronic device 510 and the second electronic device 520.

In operation 519, the second electronic device 520 may transmit a BLE advertisement message and/or WUR packet to the first electronic device 510. In operation 521, the second electronic device 520 transmits a BLE advertisement message including an advertisement indicator, but the third electronic device 530 may not receive the BLE advertisement message. In operation 523, the third electronic device 530 may trigger its Wi-Fi Aware interface based on user input and/or setting conditions.

During a service discovery (SD) procedure on a predesignated channel (e.g., channel 149), in operation 525, the second electronic device 520 may transmit an unsolicited SDF publish message including synchronization information (sync) to the first electronic device 510. According to an embodiment, the synchronization information may include additional timing synchronization function (TSF) information for synchronization. In operation 527, the first electronic device 510 and the second electronic device 520 may exchange NAN SDF Follow-up messages.

In operation 529, the third electronic device 530 may transmit an unsolicited SDF subscribe message including an Active Subscriber. When the second electronic device 520 receives the unsolicited SDF subscribe message, in operation 531 during an SD procedure in a predesignated channel (e.g., channel 149), the second electronic device 520 may transmit a solicited SDF publish message including synchronization information (sync) to the third electronic device 530. According to an embodiment, the synchronization information may include additional timing synchronization function (TSF) information for synchronization. In operation 533, the third electronic device 530 and the second electronic device 520 may exchange NAN SDF Follow-up messages.

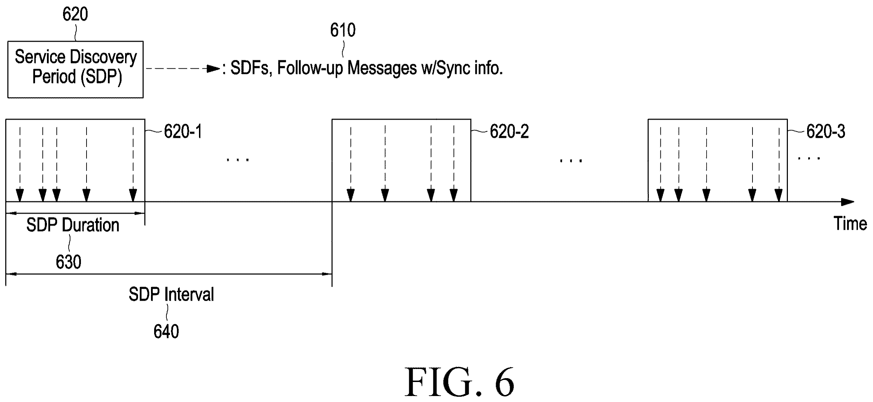

FIG. 6 is a view illustrating a service discovery period (SDP) according to an embodiment of the disclosure.

FIG. 6 is a view encompassing a USD operation according to an embodiment of the disclosure, and the above-described FIGS. 3 to 5 describe specific operations of the USD operation. Referring to FIG. 6, at least one electronic device may transmit a service discovery frame (SDF) message and/or a Follow up message 610 including synchronization information in an SDP 620.

The at least one electronic device may transmit a service discovery frame (SDF) message and/or a Follow up message 610 including synchronization information in each of a first SDP 620-1 to a third SDP 620-3. According to an embodiment, each of an SDP duration 630 and an SDP interval 640 may be preset as a specific TU.

A USD operation is introduced to simplify and accelerate an initial device/service discovery flow, and a discovery beacon that indicates a start time of a discovery window (DW) may also be skipped in an initial USD operation. In this case, roles of an anchor master node and a NAN master node that perform roles related to discovery beacon broadcasting may also be skipped, and a NAN role may be simplified to two roles of master and non-master for a cluster. According to an embodiment, synchronization information may be transmitted at any time from devices having these two roles. Due to this simplification, cluster coverage may be decreased to a TX range of a master node because there is no need to relay and forward discovery beacons to further extend cluster coverage.

According to an embodiment, sync nodes and non-sync nodes defined in Wi-Fi Aware may also be removed when all cluster members participate in a synchronization phase to exchange TSF information. The synchronization phase may be selectively omitted by combining USD and the synchronization phase. By introducing implicit synchronization using SDF, time required for synchronization (i.e., transmitting/receiving sync beacon frames in a designated DW) may be further decreased.

According to an embodiment, a NAN role may be simplified to master and non-master through removal of discovery beacons. Further, NAN roles for sync and non-sync nodes may also be omitted, and all cluster nodes may participate in a synchronization phase in an implicit manner. For this, essential TSF information for synchronization may be additionally included in a piggyback manner in a NAN SDF Publish message, an SDF Subscribe message, and/or an SDF follow-up message.

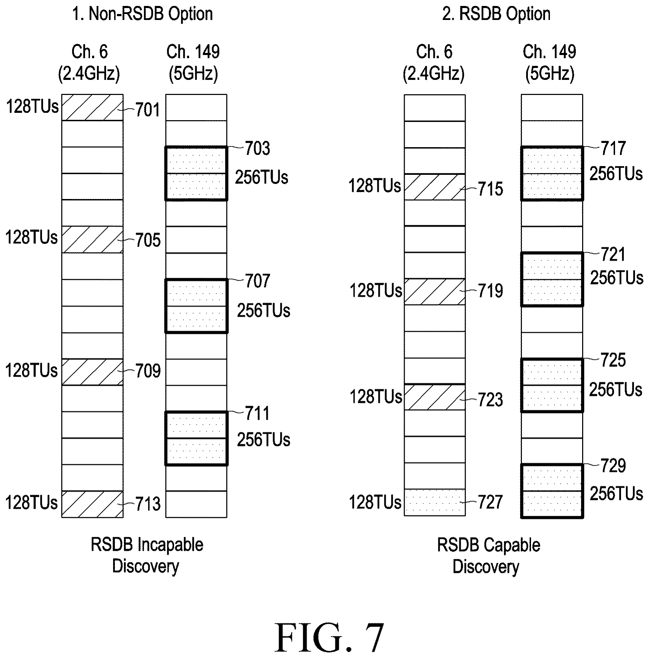

FIG. 7 illustrates examples of channel and time resource operation according to whether real-time simultaneous dual band (RSDB) is operated according to an embodiment of the disclosure.

The examples of RSDB incapable unsynchronized Service Discovery (USD) operation and RSDB capable USD operation illustrated in FIG. 7 are merely examples for convenience of description, and the technical spirit of the disclosure is not limited thereto, and each of RSDB incapable USD and RSDB capable USD operation may be variously implemented according to design specifications.

In the case of an RSDB incapable USD operation, a first USD operation 701 may be performed for a set time (e.g., 128 TUs) in a first channel/band (e.g., channel 6 of 2.4 GHz), and a second USD operation 703 may be performed for a set time (e.g., 256 TUs) in a second channel/band (e.g., channel 149 of 5 GHz). Each of the first USD operation 701 and the second USD operation 703 is performed between at least two electronic devices and may not proceed simultaneously in time.

In the case of an RSDB incapable USD operation, a third USD operation 705 may be performed for a set time (e.g., 128 TUs) in a first channel/band (e.g., channel 6 of 2.4 GHz), and a fourth USD operation 707 may be performed for a set time (e.g., 256 TUs) in a second channel/band (e.g., channel 149 of 5 GHz). Each of the third USD operation 705 and the second USD operation 707 is performed between at least two electronic devices and may not proceed simultaneously in time. Thereafter, similarly, each of a fifth USD operation 709, a sixth USD operation 711, and a seventh USD operation 713 may be performed.

In the case of an RSDB capable USD operation, an eighth USD operation 715 may be performed for a set time (e.g., 128 TUs) in a first channel/band (e.g., channel 6 of 2.4 GHz), and a ninth USD operation 717 may be performed for a set time (e.g., 256 TUs) in a second channel/band (e.g., channel 149 of 5 GHz). Each of the eighth USD operation 715 and the ninth USD operation 717 is performed between at least two electronic devices operating RSDB and may proceed simultaneously in time.

In the case of an RSDB capable USD operation, a tenth USD operation 719 may be performed for a set time (e.g., 128 TUs) in a first channel/band (e.g., channel 6 of 2.4 GHz), and an eleventh USD operation 721 may be performed for a set time (e.g., 256 TUs) in a second channel/band (e.g., channel 149 of 5 GHz). Each of the tenth USD operation 719 and the eleventh USD operation 721 is performed between at least two electronic devices operating RSDB and may proceed simultaneously in time. Thereafter, similarly, each of a twelfth USD operation 723, a thirteenth USD operation 725, a fourteenth USD operation 727, and a fifteenth USD operation 727 may be performed.

According to an embodiment, a plurality of USD operations may be simultaneously performed in multiple bands or channels to further reduce total dwell time of all channels. According to an embodiment, to simultaneously perform USD operations in multiple bands or channels, periods/intervals may need to be separately managed for each band or channel.

According to an embodiment, an RSDB function may reduce search latency when there are legacy Wi-Fi Aware devices operating in 2.4 GHz channels. When there is an NDP requiring intensive data transmission in 5 GHz, search operations may be performed in 2.4 GHz.

According to an embodiment, simultaneous operations for USD/SD in multiple bands or channels may be coordinated through RSDB or virtual simultaneous dual band (VSDB) functions. According to an embodiment, a duration of a service discovery period (USD/SD) may be adjusted according to conditions such as AP connection, data traffic, and service type. According to an embodiment, a duration of each period may be set to a specific value of TU. These values may be determined in a static or dynamic manner.

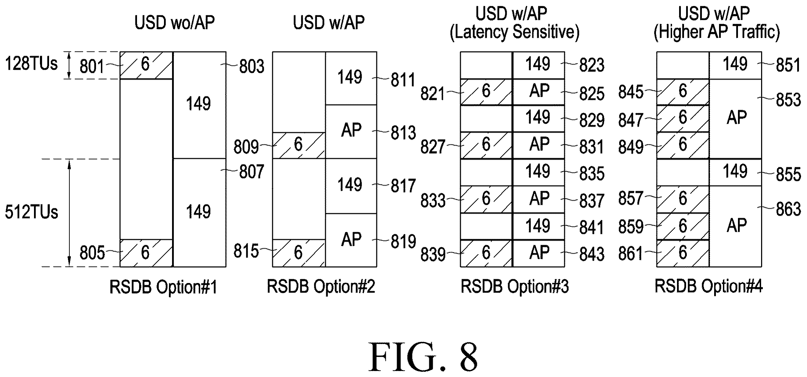

FIG. 8 illustrates examples of channel and time resource operation according to various conditions in an RSDB operable circumstance according to an embodiment of the disclosure.

The examples of each of RSDB Option#1 to RSDB Option#4 illustrated in FIG. 8 are merely examples for convenience of description, and the technical spirit of the disclosure is not limited thereto, and each of RSDB Option#1 to RSDB Option#4 may be variously implemented according to design specifications.

RSDB Option#1 illustrates an example of channel and time resource operation when there is no AP connection in an RSDB operable circumstance. A first USD operation 801 may be performed for a set time (e.g., 128 TUs) in a first channel/band (e.g., channel 6 of 2.4 GHz), and a second USD operation 803 may be performed for a set time (e.g., 512 TUs) in a second channel/band (e.g., channel 149 of 5 GHz). Each of the first USD operation 801 and the second USD operation 803 is performed between at least two electronic devices operating RSDB and may proceed simultaneously in time. Thereafter, a third USD operation 805 and a fourth USD operation 807 may be similarly performed. RSDB Option#1 may be a case of utilizing a first channel/band (e.g., channel 6 of 2.4 GHz) as a social channel (considering some legacy Wi-Fi Aware devices supporting only 2.4 GHz, band distribution between devices).

RSDB Option#2 illustrates an example of channel and time resource operation when there is an AP connection in an RSDB operable circumstance. A fifth USD operation 809 may be performed for a set time (e.g., 128 TUs) in a first channel/band (e.g., channel 6 of 2.4 GHz), a sixth USD operation 811 may be performed for a set time (e.g., 256 TUs) in a second channel/band (e.g., channel 149 of 5 GHz), and an AP-related operation 813 may be performed for a set time (e.g., 256 TUs) in the second channel/band (e.g., channel 149 of 5 GHz). Each of the fifth USD operation 809 and the AP-related operation 813 may proceed simultaneously in time. Thereafter, a seventh USD operation 815, an eighth USD operation 817, and an AP-related operation 819 may be similarly performed. RSDB Option#2 may support Aware discovery in some 2.4 GHz Ch.6 even during a 5 GHz AP occupation period, with AP/Aware scheduling set to 5:5 for a second channel/band (e.g., channel 149 of 5 GHz).

RSDB Option#3 illustrates an example of channel and time resource operation when there is an AP connection and it is latency sensitive in an RSDB operable circumstance. A ninth USD operation 821 may be performed for a set time (e.g., 128 TUs) in a first channel/band (e.g., channel 6 of 2.4 GHz), a tenth USD operation 823 may be performed for a set time (e.g., 128 TUs) in a second channel/band (e.g., channel 149 of 5 GHz), and an AP-related operation 825 may be performed for a set time (e.g., 128 TUs) in the second channel/band (e.g., channel 149 of 5 GHz). The ninth USD operation 821 and the AP-related operation 825 may proceed simultaneously in time. An eleventh USD operation 829 may be performed for a set time (e.g., 128 TUs) in a second channel/band (e.g., channel 149 of 5 GHz), a twelfth USD operation 827 may be performed for a set time (e.g., 128 TUs) in a first channel/band (e.g., channel 6 of 2.4 GHz), and an AP-related operation 831 may be performed for a set time (e.g., 128 TUs) in the second channel/band (e.g., channel 149 of 5 GHz). The twelfth USD operation 827 and the AP-related operation 831 may proceed simultaneously in time. Thereafter, USD operations 833, 835, 839, 841 and AP-related operations 837, 843 may be similarly performed.

RSDB Option#4 illustrates an example of channel and time resource operation when there is an AP connection and higher AP traffic is present in an RSDB operable circumstance. A thirteenth USD operation 851 may be performed for a set time (e.g., 128 TUs) in a second channel/band (e.g., channel 149 of 5 GHz), each of fourteenth to sixteenth USD operations 845, 847, 849 may be performed for a set time (e.g., 128 TUs) in a first channel/band (e.g., channel 6 of 2.4 GHz), and an AP-related operation 853 may be performed for a set time (e.g., 384 TUs) in the second channel/band (e.g., channel 149 of 5 GHz). The ninth USD operation 821 and the AP-related operation 825 may proceed simultaneously in time. Thereafter, USD operations 855, 857, 859, 861 and AP-related operations 863 may be similarly performed.

In RSDB Option#3, when AP traffic in a 5 GHz band (Ch. 149) is latency sensitive (e.g., voice/conference call), time may be allocated to an AP more frequently and uniformly (5:5). In RSDB Option#4, when AP traffic is heavy (e.g., high volume data transfer), Aware discovery may be supported in 2.4 GHz Ch.6 during a 5 GHz AP occupation period in a circumstance of allocating more time to an AP (2.5:7.5). An AP connection may mainly use 5 GHz and a 2.4 GHz Ch.6 may be utilized as a social channel (considering some legacy Wi-Fi Aware devices supporting only 2.4 GHz, band distribution between devices).

According to an embodiment, a duration of a service discovery period (USD/SD) may be adjusted according to conditions such as AP connection, data traffic, and service type. According to an embodiment, a duration of each period may be set to a specific value of TU. These values may be determined in a static or dynamic manner.

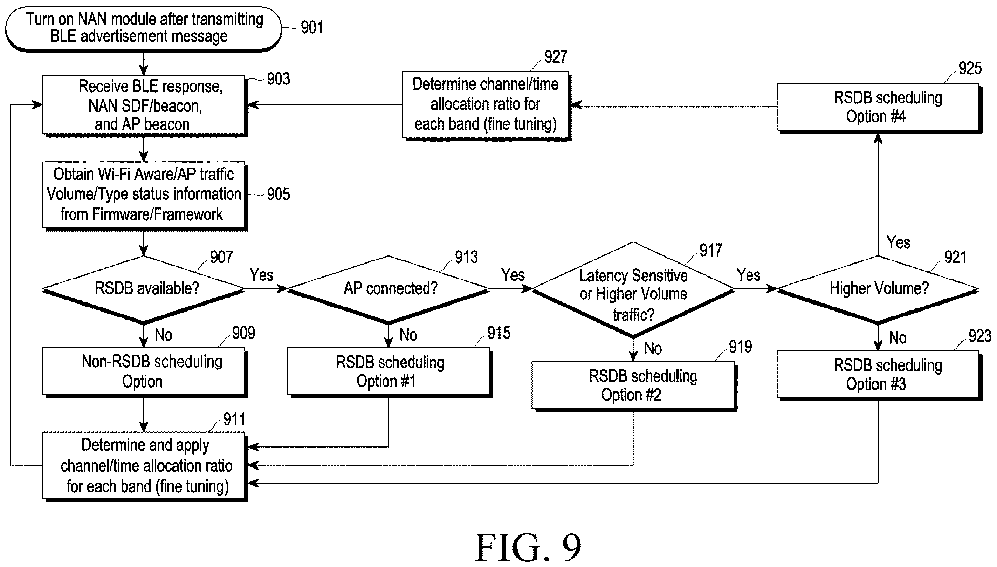

FIG. 9 is a flowchart for describing an operation of an electronic device according to an embodiment of the disclosure. The electronic device of FIG. 9 may be implemented as a Wi-Fi Aware device performing a sender role.

In operation 901, the electronic device may transmit a BLE advertisement message and turn on a NAN module (or Wi-Fi Aware interface). In operation 903, the electronic device may receive a BLE response message, a NAN SDF/beacon, and/or an AP beacon.

In operation 905, the electronic device may obtain Wi-Fi Aware/AP traffic volume information and/or Wi-Fi Aware/AP type status information from firmware or a framework.

In operation 907, the electronic device may identify whether real-time simultaneous dual band (RSDB) function is available. If the RSDB function is not available in operation 907 (907-No), in operation 909, the electronic device may perform a USD operation through a Non-RSDB scheduling Option as illustrated in FIG. 7. Thereafter, in operation 911, the electronic device may determine and apply a channel and/or time allocation ratio for each band (fine tuning).

If the RSDB function is available in operation 907 (907-Yes), in operation 913, the electronic device may identify whether AP connection is possible. If AP connection is not possible in operation 913 (913-No), in operation 915, the electronic device may perform a USD operation based on RSDB scheduling Option #1 illustrated in FIG. 8. Thereafter, in operation 911, the electronic device may determine and apply a channel and/or time allocation ratio for each band (fine tuning).

If AP connection is possible in operation 913 (913-Yes), in operation 917, the electronic device may identify whether AP traffic is latency sensitive or higher volume traffic. If AP traffic is not latency sensitive and is not higher volume traffic in operation 917 (917-No), in operation 919, the electronic device may perform a USD operation based on RSDB scheduling Option #2 illustrated in FIG. 8. Thereafter, in operation 911, the electronic device may determine and apply a channel and/or time allocation ratio for each band (fine tuning).

If AP traffic is latency sensitive or higher volume traffic in operation 917 (917-Yes), in operation 921, the electronic device may identify whether AP traffic is higher volume traffic.

If AP traffic is not higher volume traffic (i.e., AP traffic is latency sensitive) in operation 921 (921-No), in operation 923, the electronic device may perform a USD operation based on RSDB scheduling Option #3. Thereafter, in operation 911, the electronic device may determine and apply a channel and/or time allocation ratio for each band (fine tuning).

If AP traffic is higher volume traffic in operation 921 (921-Yes), in operation 925, the electronic device may perform a USD operation based on RSDB scheduling Option #4. Thereafter, in operation 927, the electronic device may determine and apply a channel and/or time allocation ratio for each band (fine tuning). According to an embodiment, after operation 927, the electronic device may perform operation 903 again if necessary.

In the disclosure, advanced device/service discovery control (ADSDC) data related to operation 905 may be recorded inside the electronic device (or sysfs node (/sys/wifi/nan)) or received from another node and provided to NAN firmware (chip side).

The ADSDC data may include at least one of fields in Table 1.

**[Table 1]**

| **Field** | **Size (bits)** | **Description** | **Value** | **Expected FW operation (Requirement)** |
|---|---|---|---|---|
| **OUI** | 8 | Vendor specific OUI type | 64 (01000000) | Be aware of OUI, and can decrypt ADSDC data |
| **Length** | 8 | Length of this OUI data | 0x00 ~ 0xFF | Take into account for this field as length of ADSDC data. |
| **Type** | 2 | ADSDC packet type | 00: Request | Be aware of ADSDC packet type |
| | | | 01: Request (Response not required) | |
| | | | 10: Response | |
| | | | 11: Confirm | |
| **Subtype** | 3 | Synchronizati on reference | 000: Return to original NAN operation (Standard NAN Cluster) | NAN device decrypts the following data field correctly according to this subtype value. |
| | | | 001: Another NAN Cluster | |
| | | | 010: Connected Access Point (AP) | |
| | | | 011: Other proxy (Beaconing device) | |
| | | | 100: Advanced NAN operation including sync piggyback SDF | |
| | | | 101-110: Reserved | |
| | | | 111: Original NAN operation which has discovery beacon and DW plus advanced NAN operations using 100 subtype | |
| **Channel type** | 2 | Indicate the type of channel with respect to the purpose | 00: Discovery channel | Interpret this value to identify the usage of channel |
| | | | 01: Operating channel for data transfer | |
| | | | 10: WUR channel | |
| | | | 11: Reserved | |
| **Simultaneous operation control on multi-band/cha nnel** | 2 | Indicate the capability of simultaneous operations on multiple bands or channels | 00: Disable | Interpret this value to identify the capability of simultaneous operations on multiple bands for RSDB feature |
| | | | 01~10: Reserved (for specific multi-antennas configuration) | |
| | | | 11: Enable | |
| **Length of channel list** | 4 | Length of the channel list according to the channel type | 0x00 ~ 0x0F | |
| **Band** | 4 | Indicate the frequency band that this applies | 0000: Various Band Indication | Refer this for band entry when apply scheduling bitmap |
| | | | 0001: Sub-1 GHz | |
| | | | 0010: 2.4 GHz | |
| | | | 0011: 5 GHz | |
| | | | 0100: 6 GHz | |
| | | | 0101: 60 GHz | |
| | | | 0101~1111: Reserved | |
| **Channel** | 4 | Reserved for byte alignment | Reserved | Interpret this value for channel entry of schedule of corresponding band |
| **Channel quality report type** | 2 | Indicate the report type for channel quality | 00: Received signal strength (dBm) | Interpret this value for channel quality report type |
| | | | 01: Quantized signal level | |
| | | | 10: Signal to noise ratio (dB) | |
| | | | 11: Reserved | |
| **Master selection rule** | 2 | Determine the master selection rule | 00: Default NAN | FW changes its NAN role according to the specified selection rule. |
| | | | 01: Initial sender having SDF publisher role becomes master (static) | |
| | | | 10: Advanced NAN operation capable device becomes master | |
| | | | 11: Reserved | |
| **Master selection** | 1 | Determine the master role | 0: Master | Interpret this value for assigning the simplified NAN role |
| | | | 1: Non-master | |
| **Role selection for service discovery** | 2 | Determine specific type of publisher/subs criber | 00: Publisher using both types of solicited and unsolicited SDF publish messages | Interpret this value for assigning specific role of publisher/subscri ber |
| | | | 01: Publisher using solicited SDF publish message only | |
| | | | 10: Active subscriber | |
| | | | 11: Passive subscriber | |
| **SDF type** | 2 | Indicate type of SDF | 00: Original SDF | Interpret this value for identifying the type of SDF |
| | | | 01~10: Reserved | |
| | | | 11: Sync piggyback SDF | |
| **Period type** | 2 | Indicate the type of period | 00: Initial USD period | Interpret this value for identifying the type of period |
| | | | 01: SD period | |
| | | | 10: Reserved | |
| | | | 11: DW period | |
| **SD period interval** | 4 | NAN device shall wake up after SD period interval from the prior end timing of SD period. | 0: Do not wake up on SD period | 0: Awake only when OOB wake-up message (BLE or WUR packet) is received |
| | | | 1 (= 2^1): Wake up interval between prior SD period and the next SD period is 2TUs. | |
| | | | 1111 (= 2^15): Wake up interval is 2^15(= 32768) TUs. | Others: Awake on the start timing of SD period after the SD period interval is passed |
| **SD period duration** | 4 | NAN device shall wait for listening to frames during SD period duration. | 0: Do not wake up | 0: Sleep until OOB wake-up message (BLE or WUR packet) is received |
| | | | 1 ( = 8*2): Wake up at the SD period during 16TUs | |
| | | | 1111(=8*16): Wake up at the SD period during 128TUs | |
| | | | | Others: Awake during SD period duration |

The ADSDC data may include at least one of fields in Table 2.

**[Table 2]**

| **Field** | **Size (bits)** | **Description** | **Value** | **Expected FW operation (Requirement)** |
|---|---|---|---|---|
| **DW interval** | 4 | NAN device should wake up after DW interval from the prior end timing of DW. | 0: Do not wake up on DW | 0: Sleep until OOB wake-up message (BLE or WUR packet) is received |
| | | | 1 (= 2^1): Wake up interval between prior and the next DWs is 2TUs. 1111 (= 2^15): Wake up interval is 2^15(= 32768) TUs. | |
| | | | | Others: Awake on the start timing of DW after the DW interval is passed |
| **DW duration** | 4 | NAN device should wait for listening to sync beacon and SDF during DW duration. | 0: Do not wake up 1 ( = 16*1): Wake up at the DW during 8TUs | 0: Sleep until OOB wake-up message (BLE or WUR packet) is received |
| | | | 1111(=16*15): Wake up at the DW during 240TUs | Others: Awake on DW |
| **Duration of dwell period for initial USD in sender** | 4 | For the initial USD, sender device shall await during a specific dwell period duration per channel in order to listens to any subscribe message. | 0: Do not wake up on USD period (Off USD period) | Others: The minimum amount of time spent on a channel is 64TUs. |
| | | | 1: Listen to a specific channel for 1*64TUs (Default) | |
| | | | 1111 (= 15): Listen to a specific channel for 15*64 (=960) TUs | |
| **Timeout for initial USD retry of sender** | 4 | For the initial USD, sender device shall re-try after timeout for initial USD retry, when the sender does not receive the subscribe messages at the prior dwell period for USD. | 0: Do not wake up on USD period 1 (= 2^1): Wake up interval between prior and posterior USD periods is 2TUs. | 0: Awake only when OOB wake-up message (BLE or WUR packet) is received |
| | | | | Others: Be capable of re-try on the USD |
| | | | 1111 (= 2^15): Wake up interval is 2^15(= 32768) TUs. | period until the timeout for USD retry is passed |
| **Interval between unsolicited SDF publish messages** | 4 | NAN master device should send the unsolicited SDF publish messages at an interval | 0: Do not send multiple messages but send a single message | FW exploits this value only when role selection for service discovery is 00. |
| | | | 1 ( = 1)): Send multiple messages at an interval of 1TU | 0: Send a single message |
| | | | | Others: Send multiple messages at |
| | | | 1111 (= 15): Send multiple messages at an interval of 15TUs | an interval |
| **Number of unsolicited SDF publish messages in USD or SD period** | 4 | v unsolicited SDF publish messages during USD or SD period (at an interval) | 0: Do not send message | FW exploits this value only when role selection for service discovery is 00. |
| | | | 1 (= 1): Send a single message | |
| | | | 1111 (= 15): Send fifteen sequential messages | Interpret this value for identifying the number of unsolicited SDF publish messages in a SD period, when an interval of messages is set to a fixed value) |
| | | | | 0: Do not send the unsolicited SDF publish message, when role selection for service discovery is 00. |
| | | | | Others: Send unsolicited SDF publish message(s) |
| **Timeout of receiver for initial USD** | 4 | For the initial USD, receiver subscriber device shall re-try to transmit SDF subscribe message after timeout of subscriber, when the subscriber does not receive the follow-up message. | 0: Re-try to transmit SDF subscribe message on the USD period until subscriber receives the unsolicited SDF publish or follow-up message | 0: Re-try until unsolicited/solicited SDF publish or follow-up message is received Others: Awake for the timeout duration |
| | | | 1 (= 2^1): Timeout duration becomes 2TUs. | |
| | | | 1111 (= 2^15): Timeout duration becomes 2^15(= 32768) TUs. | |
| **Interval between unsolicited SDF subscribe messages** | 4 | NAN master device should send the unsolicited SDF subscribe messages at an interval | 0: Do not send multiple messages but send a single message | FW exploits this value only when role selection for service discovery is 00. |
| | | | 1 ( = 1)): Send multiple messages at an interval of 1TU | |
| | | | | 0: Send a single message |
| | | | 1111 (= 15): Send multiple messages at an interval of 15TUs | Others: Send multiple messages at an interval |
| **Number of unsolicited SDF subscribe messages in USD or SD period** | 4 | Indicate the number of unsolicited SDF subscribe messages during USD or SD period (at an interval) | 0: Do not send message | FW exploits this value only when role selection for service discovery is 10 or 11. |
| | | | 1 (= 1): Send a single message | |
| | | | 1111 (= 15): Send fifteen sequential messages | |
| | | | | Interpret this value for identifying the number of unsolicited SDF publish messages in a SD period, when an interval of messages is set to a fixed value) |
| | | | | 0: Do not send the unsolicited SDF subscribe message, when role selection for service discovery is not 10. |
| | | | | Others: Send unsolicited SDF subscribe message(s) |
| **Data fragmentatio n control inside NAN SDF** | 1 | Indicate the capability of data fragmentation inside NAN SDF | 0: Disable | Interpret this value to identify the capability of data fragmentation only when the unicast NAN SDFs (i.e., Publish, Follow-up) are used. |
| | | | 1: Enable | |
| **Control of Sync piggyback data** | 1 | Indicate the capability of sync piggyback data in the NAN SDF | 0: Disable | Interpret this value to identify the capability of sync piggyback only when subtype field value is 101 or 111. |
| | | | 1: Enable | |
| **Sync piggyback data (optional)** | Var. | Contain piggyback information for synchronization (Refer the Table 3.3.2) | | FW optionally exploits the information defined in Table 3.3.2 only when subtype field value is 101. |

Sync piggyback information included in an SDF message according to an embodiment of the disclosure may include at least one of fields in Table 3.

**[Table 3]**

| **Type** | **Field** | **Size (Octets)** | **Description** | **Value** | **Expected FW operation (Requirement)** |
|---|---|---|---|---|---|
| **NAN Sync Piggyback Information for SDF** | Length of piggyback data | 2 | Length of this piggyback data | 00:00 ~ FF:FF | Take into account for this field as length of Piggyback Sync data. |
| | NMI of receiver (A1) | 6 | Identify NMI of receiver | 00:00:00:00: 00:00 ~FF:FF:FF:F F:FF:FF | Interpret this value to identify the NMI of frame receiver |
| | NMI of sender (A2) | 6 | Identify NMI of sender | 00:00:00:00: 00:00 ~FF:FF:FF:FF:FF:FF | Interpret this value to identify the NMI of frame sender |
| | NAN Cluster ID (A3) | 6 | Identify NAN Cluster ID | 50:6F:9A:01: 00:00 ~50:6F:9A:0 1:FF:FF | Interpret this value to identify the current NAN Cluster ID |
| | Timestamp | 8 | Time stamp | 0 ~ FFFFFFFFF FFFFFFF | FW exploits this value for TSF. |
| | Capability | 2 | Capability information field | See Table. 30 in [1] | Interpret this value to identify capabilities of several features |
| | Sequence control | 2 | Sequence control | 00:00 ~ FF:FF | FW exploits this value to control data fragmentation or to calculate frame error rate by accumulating the TX/RX results for multiple SDFs. |
| | Data | Var | Include the additional vendor specific data | | FW appends the vendor specific data to the SDF. |

For reference, in the "See Table. 30 in [1]" portion used as a value of a capability field in Table 3, reference [1] is Wi-Fi Aware Specification R4.

According to an embodiment, NAN firmware in an electronic device may operate according to the above-described ADSDC data. According to an embodiment, ADSDC data may be inserted into a NAN SDF, a NAN action frame, an NDP setup frame, a Wi-Fi frame, and/or a BLE/WUR OOB packet, and may be recognized by NAN firmware. Through internal transmission methods in an electronic device such as a NAN framework and a NAN hardware abstraction layer (HAL), NAN firmware may appropriately process data. An electronic device that receives an ADSDC request may decode this information and respond back to an initiator.

According to an embodiment, an ADSDC attribute may be composed of a plurality of parameters that coordinate an entire discovery operation. According to an embodiment, a synchronization method in a discovery operation may vary according to a subtype field of ADSDC data indicating a type of synchronization reference. (For example, when a value of the subtype field is 101, ADSDC data additionally includes information of Table 3)

According to an embodiment, if a sync piggyback SDF is exchanged in an SD cycle, NDP setup may be established in a shorter time. According to an embodiment, regarding a duration/interval control policy for an SD period or DW, a NAN device may consider a balance between search latency and energy saving when intended.

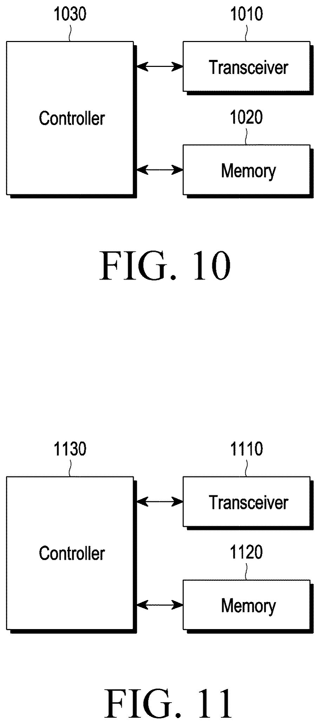

FIG. 10 is a view illustrating a structure of an electronic device (sender) according to an embodiment of the disclosure. The electronic device (sender) of FIG. 10 may be implemented as an electronic device or Wi-Fi Aware device performing a sender role illustrated in FIG. 3 to FIG. 9.

Referring to FIG. 10, the electronic device may include a transceiver 1010, a controller 1020, and a storage unit 1030. In the disclosure, the controller may be defined as a circuit or application-specific integrated circuit or at least one processor.

The transceiver 1010 may transmit and receive a signal to and from an external electronic device.

The controller 1020 may control the overall operation of the electronic device (sender) according to the embodiment proposed in the disclosure. For example, the controller 1020 may control inter-block signal flow to perform the operations according to the above-described flowchart. Specifically, a controller 1020 may control, e.g., operations of the electronic device (sender) illustrated in FIG. 3 to FIG. 9.

The storage unit 1030 may store at least one of information transmitted/received via the transceiver 1010 and information generated via the controller 1020.

According to an embodiment of the disclosure, an electronic device (sender) includes a transceiver 1010 and a controller 1030. The controller 1030 may transmit a Bluetooth low energy (BLE) advertisement message and activate a Wi-Fi Aware module of the electronic device. The controller 1030 may identify whether a real-time simultaneous dual band (RSDB) function is available. The controller 1030 may, if the RSDB function is available as a result of the identifying, select one RSDB scheduling option from among a plurality of RSDB scheduling options based on whether there is an access point (AP) connection of the electronic device and AP traffic characteristics. The controller 1030 may perform a discovery procedure according to the selected RSDB scheduling option.

According to an embodiment, the controller 1030 may, if the RSDB function is not available as a result of the identifying, perform the discovery procedure according to a Non-RSDB scheduling option.

According to an embodiment, the controller 1030 may, if the AP connection is not present, select a first RSDB scheduling option from among the plurality of RSDB scheduling options.

According to an embodiment, the controller 1030 may, if the AP connection is present and the AP traffic is not sensitive to delay and an amount of the AP traffic is less than a threshold, select a second RSDB scheduling option from among the plurality of RSDB scheduling options.

According to an embodiment, the controller 1030 may, if the AP connection is present and the AP traffic is sensitive to delay, select a third RSDB scheduling option from among the plurality of RSDB scheduling options.

According to an embodiment, the controller 1030 may, if the AP connection is present and an amount of the AP traffic is equal to or greater than a threshold, select a fourth RSDB scheduling option from among the plurality of RSDB scheduling options.

According to an embodiment, the controller 1030 may adjust at least one of a channel and a time allocation ratio for each band according to the selected RSDB scheduling option. According to an embodiment, the controller 1030 may obtain information about Wi-Fi Aware from firmware or a framework in the electronic device. According to an embodiment, the controller 1030 may obtain information about the AP traffic from the firmware or the framework in the electronic device.

According to an embodiment, the discovery procedure may include an unsynchronized service discovery USD operation. According to an embodiment, some options among the plurality of RSDB scheduling options may allocate an AP-related operation during a set time unit TU of a preset channel.

FIG. 11 is a view illustrating a structure of an electronic device according to an embodiment of the disclosure. The electronic device (receiver) of FIG. 11 may be implemented as an electronic device or Wi-Fi Aware device performing a receiver role illustrated in FIG. 3 to FIG. 9.

Referring to FIG. 11, the electronic device may include a transceiver 1110, a controller 1120, and a storage unit 1130. In the disclosure, the controller may be defined as a circuit, an application-specific integrated circuit, or at least one processor.

The transceiver 1110 may transmit and receive a signal to and from an external electronic device.

The controller 1120 may control the overall operation of the electronic device according to an embodiment. For example, the controller 1120 may control inter-block signal flow to perform the operations according to the above-described flowchart. Specifically, a controller 1120 may control, e.g., operations of the electronic device (receiver) illustrated in FIG. 3 to FIG. 9.

The storage unit 1130 may store at least one of information transmitted/received via the transceiver 1110 and information generated via the controller 1120.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present disclosure have been described above, various changes may be made thereto without departing from the scope of the present disclosure. Thus, the scope of the disclosure should not be limited to the above-described embodiments, and should rather be defined by the following claims and equivalents thereof.

## Claims

1. A method of operating an electronic device performing Wi-Fi Aware communication, the method comprising:
transmitting a Bluetooth low energy (BLE) advertisement message and activating a Wi-Fi Aware module of the electronic device;
identifying whether a real-time simultaneous dual band (RSDB) function is available;
based on the RSDB function being available as a result of the identifying, selecting one RSDB scheduling option from among a plurality of RSDB scheduling options based on whether there is an access point (AP) connection of the electronic device and AP traffic characteristics; and
performing a discovery procedure according to the selected RSDB scheduling option.

2. The method of claim 1, further comprising, if the RSDB function is not available as a result of the identifying, performing the discovery procedure according to a Non-RSDB scheduling option.

3. The method of claim 1, further comprising, based on the AP connection not being present, selecting a first RSDB scheduling option from among the plurality of RSDB scheduling options.

4. The method of claim 1, further comprising, based on the AP connection being present and the AP traffic not being sensitive to delay and an amount of the AP traffic being less than a threshold, selecting a second RSDB scheduling option from among the plurality of RSDB scheduling options.

5. The method of claim 1, further comprising, based on the AP connection being present and the AP traffic being sensitive to delay, selecting a third RSDB scheduling option from among the plurality of RSDB scheduling options.

6. The method of claim 1, further comprising, based on the AP connection being present and an amount of the AP traffic being equal to or greater than a threshold, selecting a fourth RSDB scheduling option from among the plurality of RSDB scheduling options.

7. The method of claim 1, further comprising adjusting at least one of a channel and a time allocation ratio for each band according to the selected RSDB scheduling option.

8. The method of claim 1, further comprising:
obtaining information about Wi-Fi Aware from firmware or a framework in the electronic device; or
obtaining information about the AP traffic from the firmware or the framework in the electronic device.

9. The method of claim 1, wherein the discovery procedure includes an unsynchronized service discovery (USD) operation.

10. The method of claim 1, wherein some options among the plurality of RSDB scheduling options allocate an AP-related operation during a set time unit (TU) of a preset channel.

11. An electronic device performing Wi-Fi Aware communication, the electronic device comprising:
a transceiver; and
a controller, wherein the controller is configured to:
transmit a Bluetooth low energy (BLE) advertisement message and activates a Wi-Fi Aware module of the electronic device;
identify whether a real-time simultaneous dual band (RSDB) function is available;
based on the RSDB function being available as a result of the identifying, select one RSDB scheduling option from among a plurality of RSDB scheduling options based on whether there is an access point (AP) connection of the electronic device and AP traffic characteristics; and
perform a discovery procedure according to the selected RSDB scheduling option.

12. The electronic device of claim 11, wherein the controller is configured to, based on the RSDB function not being available as a result of the identifying, perform the discovery procedure according to a Non-RSDB scheduling option.

13. The electronic device of claim 11, wherein the controller is configured to, based on the AP connection not being present, select a first RSDB scheduling option from among the plurality of RSDB scheduling options.

14. The electronic device of claim 11, wherein the controller is configured to, based on the AP connection being present and the AP traffic not being sensitive to delay and an amount of the AP traffic being less than a threshold, select a second RSDB scheduling option from among the plurality of RSDB scheduling options.

15. The electronic device of claim 11, wherein the controller is configured to, based on the AP connection being present and the AP traffic being sensitive to delay, select a third RSDB scheduling option from among the plurality of RSDB scheduling options.
